# EUROPÄISCHE PATENTSCHRIFT

(11) **EP 2 511 868 B1**
(45) Veröffentlichungstag und Bekanntmachung des Hinweises auf die Patenterteilung: **10.04.2013**
(21) Anmeldenummer: 11450050.7
(22) Anmeldetag: 15.04.2011
(51) Int. Cl.: G06Q 30/00, G06Q 20/00, G07B 15/06, G07F 7/08

(54) **Verfahren zum Abrechnen Von Ortsnutzungen**
Method for invoicing the use of locations
Procédé de calcul d'utilisations d'espaces

(43) Veröffentlichungstag der Anmeldung: 17.10.2012
(73) Patentinhaber: Kapsch TrafficCom AG, 1120 Wien (AT)
(72) Erfinder: Namdar, Nader, A-1120 Wien (AT)
(74) Vertreter: Weiser, Andreas

(56) Entgegenhaltungen:
- US-A1- 2005 010 478
- EXPERT GROUP 12: "Security aspects of the EETS", EG 12 FINAL REPORT V1.0 5APR07,, Nr. v1.0, 5. April 2007 (2007-04-05), Seiten 1-86, XP007916364,
- "The CESARE Project", ASECAP , 28. Juli 2011 (2011-07-28), XP002654049, Gefunden im Internet: URL:http://www.asecap.com/pdf_files/The%20 CESARE%20Project%20-EN.pdf [gefunden am 2011-07-28]

## Beschreibung

Die vorliegende Erfindung betrifft ein Verfahren zum Abrechnen von Ortsnutzungen von Fahrzeugen in einem Straßenmautsystem mittels eines davon gesonderten Zahlungstransaktionssystems, wobei das Straßenmautsystem einen zentralen Mautserver und damit in Verbindung stehend dezentrale Mautterminals und zumindest ein Subsystem zum Ermitteln der Ortsnutzungen der Fahrzeuge im Zusammenspiel mit von diesen mitgeführten Fahrzeuggeräten umfasst, wobei das Zahlungstransaktionssystem einen Transaktionsserver und damit in Verbindung stehend dezentrale Transaktionsterminals zum Abrechnen von Zahlungstransaktionen mittels Zahlungskarten umfasst, und wobei zumindest ein Mautterminal mit zumindest einem Transaktionsterminal in Verbindung steht.

Das Ermitteln von Ortsnutzungen von Fahrzeugen erfolgt in elektronischen Straßenmautsystemen mit Hilfe von in den Fahrzeugen mitgeführten Fahrzeuggeräten (Onboard-Units, OBUs), welche zu diesem Zweck entweder über Kurzreichweitenfunk (dedicated short range communication, DSRC) mit geographisch verteilten Funkbaken (DSRC-Baken) kommunizieren, oder mit Hilfe von sich in einem globalen Satellitennavigationssystem (global navigation satellite system, GNSS) selbst verortenden GNSS-OBUs. Während in DSRC-Systemen die Baken direkt mit der Mautzentrale in Verbindung stehen, senden GNSS-OBUs die ermittelten Daten in der Regel über Mobilfunk an den zentralen Mautserver.

Das Abrechnen erfolgt in derartigen Straßenmautsystemen, wie beispielsweise gemäß der US 2005/010478 A1, meist anhand der Vorauszahlung eines Geldbetrags, welcher zusätzlich eine Sicherheitsleistung für das Fahrzeuggerät umfassen kann. Bei Rückgabe eines Fahrzeuggeräts, z.B. am Mautterminal einer dezentralen Verteilerstelle vor einem Grenzübertritt, rechnet der Mautserver die bis dahin gezahlten und die genutzten Geldbeträge ab. Damit verbunden sind Wartezeiten und unerwünschte Bargeldreserven oder aufwändige (internationale) Banküberweisungen an der jeweiligen Verteilerstelle.

Aufgrund des hohen Aufwands und der geringen Flexibilität eines solchen Verfahrens zum Abrechnen wäre es wünschenswert, das Abrechnen im Straßenmautsystem mittels eines etablierten bargeldlosen Zahlungstransaktionssystems auf Zahlungskartenbasis realisieren zu können. Durch die Verwendung von Zahlungskarten, beispielsweise Kreditkarten, sind Festlegen, Zahlen, Nachzahlen und Abrechnen eines Transaktionswerts wesentlich flexibler und sicherer. Jedoch besteht der Nachteil, dass das Straßenmautsystem, welches die Zahlungstransaktionen abzuwickeln hat, in den höchst aufwändigen Ablauf des Zahlungstransaktionssystems einzubinden ist. Derartige Zahlungstransaktionssysteme erfordern nämlich äußerst komplexe Abläufe zur Sicherung der Abwicklung von Zahlungskartentransaktionen. Die damit verbundenen Aufzeichnungen und laufend zu erbringenden Nachweise der Einhaltung festgelegter Standards und Zertifizierungen für Zahlungstransaktionssysteme, wie beispielsweise des Payment Card Industry Data Security Standards (PCI-DSS), belasten das Straßenmautsystem und insbesondere den zentralen Mautserver massiv, ohne eine Kernaufgabe des Straßenmautsystems darzustellen. So wäre der Datenzugriff äußerst restriktiv zu handhaben, die Verschlüsselung vieler Daten notwendig, alle Datenzugriffe sind zu prüfen und zu protokollieren, häufige Prüfungen aller Systeme und Prozesse sind vorzusehen, zu dokumentieren und gegenüber zugelassenen Prüforganen offenzulegen.

Die Erfindung setzt sich deshalb zum Ziel, ein Verfahren zum Abrechnen von Ortsnutzungen von Fahrzeugen in einem Stra-βenmautsystem zu schaffen, welches die Flexibilität und Sicherheit von Zahlungstransaktionssystemen mit Zahlungskarten bietet, ohne jedoch mit dem Straßenmautsystem die aufwändigen Standards dieser Zahlungstransaktionssysteme erfüllen zu müssen.

In einer ersten Ausführungsform der Erfindung wird dieses Ziel mit einem Verfahren der einleitend genannten Art erreicht, welches sich auszeichnet durch
i) in einer ersten Phase des Verfahrens die folgenden Schritte:
   Eingeben einer eindeutigen Kennung eines Fahrzeuggeräts in das Mautterminal, was auch zu einem späteren Zeitpunkt bis zum Senden der Fahrzeuggerätkennung erfolgen kann;
   Eingeben eines Transaktionswerts und einer eindeutigen Kennung einer Zahlungskarte in das Transaktionsterminal als Zahlungstransaktion und Senden einer Autorisierungsaufforderung enthaltend die Zahlungstransaktion vom Transaktionsterminal an den Transaktionsserver;
   Senden von im Transaktionsserver generierten, der Zahlungstransaktion zugehörigen Autorisierungsdaten vom Transaktionsserver an das Transaktionsterminal und Weiterleiten derselben an das Mautterminal;
   Senden der Autorisierungsdaten und einer im Transaktionsserver generierten, der Kartenkennung eindeutig zugeordneten Ersatzkennung vom Transaktionsserver an den Mautserver über eine weitere Datenverbindung zum direkten Datenaustausch zwischen diesen, mit voraus- oder nachgehendem
   Senden der Autorisierungsdaten und der Fahrzeuggerätkennung vom Mautterminal an den Mautserver; und
   einander Zuordnen der Ersatzkennung und der Fahrzeuggerätkennung im Mautserver anhand der mit diesen jeweils mitempfangenen Autorisierungsdaten;
ii) in einer zweiten Phase des Verfahrens die folgenden Schritte:
   Ermitteln von Ortsnutzungen eines das genannte Fahrzeuggerät mitführenden Fahrzeugs durch das Subsystem, und
   Berechnen zumindest eines Mautwerts aufgrund der ermittelten Ortsnutzungen bezüglich dessen Fahrzeuggerätkennung im Straßenmautsystem;
iii) in einer dritten Phase des Verfahrens die folgenden Schritte:
   Senden einer Abrechnungsaufforderung enthaltend die genannte Fahrzeuggerätkennung von einem Mautterminal an den Mautserver;
   Ermitteln der der empfangenen Fahrzeuggerätkennung zugeordneten Ersatzkennung im Mautserver und Senden der ermittelten Ersatzkennung und des zumindest einen berechneten Mautwerts vom Mautserver an den Transaktionsserver; und
   Ermitteln der der empfangenen Ersatzkennung zugeordneten Kartenkennung im Transaktionsserver und Abrechnen des zumindest einen empfangenen Mautwerts anhand der Kartenkennung.

Der Mautserver verfügt in dem geschilderten Verfahren zu keinem Zeitpunkt über Daten der Zahlungskarte oder des Zahlungstransaktionssystems, ausgenommen die - anonyme - Ersatzkennung, ebenso wie das Zahlungstransaktionssystem zu keinem Zeitpunkt über Daten des Mautservers oder des Straßenmautsystems verfügt, ausgenommen die letztlich abzurechnenden Mautwerte. Das Subsystem kann die Ortsnutzungen wie üblich weiterhin anhand der Fahrzeuggerätkennungen ermitteln, der Mautserver die Mautwerte weiterhin anhand der Fahrzeuggerätkennungen berechnen, und der Transaktionsserver die Zahlungstransaktionen weiterhin anhand der ihm bekannten Kartenkennungen abwickeln. Die Ersatzkennung wird ausschließlich im - standardisiert sicheren - Zahlungstransaktionssystem generiert und daraufhin nicht mehr verändert, sie wird auch nicht zur Abwicklung von Zahlungstransaktionen verwendet, weshalb sie keine Auswirkung auf die Sicherheit innerhalb des Zahlungstransaktionssystems hat.

Die beiden Elemente des Verfahrens zum Abrechnen von Ortsnutzungen, nämlich das Ermitteln von Ortsnutzungen und Berechnen von Mautwerten im Mautserver einerseits sowie das Abwickeln einer Zahlungstransaktion und Abrechnen der Mautwerte mit einer Zahlungskarte im Zahlungstransaktionssystem andererseits, arbeiten effizient nebeneinander unter Austausch einer geringstmöglichen Menge von Daten, ohne gegenseitige Integration. Dadurch wird der Mautserver nicht weiter belastet und Flexibilität und Sicherheit des Zahlungstransaktionssystems bleiben erhalten.

Da das Straßenmautsystem zum Ermitteln der Ortsnutzungen und zum Berechnen der Mautwerte ausschließlich übliche Kennungen wie die Fahrzeuggerätkennung nutzt und die Ersatzkennung der Zahlungskarte erst zur Abrechnung nach Aufforderung verwendet wird, bleiben außerdem bereits bestehende Prozesse im Straßenmautsystem weitestgehend unberührt, was neben einer einfacheren Umstellung auf das beschriebene Verfahren auch eine Nachrüstung bestehender Straßenmautsysteme wesentlich vereinfacht. Auch die Abwicklung von Zahlungstransaktionen im Zahlungstransaktionssystem bleibt völlig unverändert und wird lediglich um die Schritte des Erstellens und Sendens von Autorisierungsdaten und Ersatzkennung ergänzt, was die Integration in bestehende Zahlungstransaktionssysteme mit Zahlungskarten und deren Standards (wie PCI-DSS) wesentlich erleichtert.

Bevorzugt wird im Schritt des Sendens der Autorisierungsdaten und der Fahrzeuggerätkennung vom Mautterminal oder alternativ im Schritt des Sendens der Autorisierungsdaten und der Ersatzkennung vom Transaktionsserver an den Mautserver der Transaktionswert mitgesendet. Dadurch steht dem Mautserver beim Berechnen von Mautwerten aufgrund der ermittelten Ortsnutzungen der vorab übermittelte Transaktionswert z.B. als Mautwertlimit jederzeit zur Verfügung. Besonders vorteilhaft ist es, wenn der Transaktionswert sowohl vom Mautterminal als auch vom Transaktionsserver an den Mautserver mitgesendet wird, da der Mautserver in diesem Fall einen Datenvergleich vornehmen kann, und die gesendeten Daten über ein zusätzliches Identifikationsmerkmal verfügen.

Gemäß einer weiteren vorteilhaften Ausführungsform der Erfindung enthalten die Autorisierungsdaten einen Autorisierungscode, einen Zeitstempel der Autorisierung und eine eindeutige Kennung des genannten Transaktionsterminals. Da die Autorisierungsdaten zum Zuordnen der Ersatzkennung und der Fahrzeuggerätkennung im Mautserver herangezogen werden, ist es günstig, wenn diese so eindeutig wie möglich sind. Durch die Einführung eines Zeitstempels der Autorisierung in die Autorisierungsdaten entfällt ein langfristiges Aufzeichnen und Nachverfolgen umfangreicher Autorisierungscodes bezüglich deren Einzigartigkeit. Die zusätzliche Aufnahme der eindeutigen Kennung des zur Autorisierung eingesetzten Transaktionsterminals in die Autorisierungsdaten vereinfacht Erstellung und Aufbau der Autorisierungsdaten weiter.

Besonders günstig ist es, wenn im Schritt des Eingebens der Fahrzeuggerätkennung am Mautterminal zusätzlich personenund/oder fahrzeugbezogene Daten erfasst und im Schritt des Sendens der Autorisierungsdaten und der Fahrzeuggerätkennung vom Mautterminal an den Mautserver mitgesendet werden. Diese Daten ermöglichen es dem Straßenmautsystem, sowohl das Abrechnen zusätzlich zu individualisieren, indem die Abrechnungen auf Personen und/oder Fahrzeuge bezogen erstellt werden, als auch korrekte Ortsnutzungen sicherzustellen, indem die Ortsnutzungen von Fahrzeugen anhand der Fahrzeugkennzeichen oder anderer erfasster personen- und/oder fahrzeugbezogene Daten - zumindest stichprobenartig - überprüft werden.

In einer besonders vorteilhaften Ausführungsform der Erfindung werden im Mautserver mehrere Fahrzeuggerätkennungen ein- und derselben Ersatzkennung unter einer Vertragskennung zugeordnet. Eine solche Vorgehensweise erleichtert das Zuordnen und Abrechnen von Ortsnutzungen von Fahrzeugen aus Fuhrparks und bei häufigem Tausch der Fahrzeuggeräte, etwa bei Mietfahrzeugen.

In einer Ausführungsform der Erfindung umfasst das Straßenmautsystem zumindest ein Subsystem, das über ein Netz geografisch verteilter Funkbaken, welche mit Fahrzeuggeräten über Kurzreichweitenfunk kommunizieren, deren Ortsnutzungen ermittelt. Alternativ oder ergänzend dazu umfasst das Straßenmautsystem in einer weiteren Ausführungsform zumindest ein Subsystem, das über sich in einem globalen Satellitennavigationssystem selbst verortende Fahrzuggeräte, welche mit dem Mautserver über ein Funknetz kommunizieren, deren Ortsnutzungen ermittelt. Das vorliegende Verfahren ist damit flexibel einsetzbar, unabhängig davon, wie die Ortsnutzungen von Fahrzeugen zum Berechnen von Mautwerten ermittelt werden.

Besonders bevorzugt erfolgt der Schritt des Eingebens des Transaktionswerts in das Transaktionsterminal durch Datenübertragung vom Mautterminal zum Transaktionsterminal. Dadurch kann der Transaktionswert zunächst einfach im Mautterminal eingegeben werden und zur Zahlungstransaktion an das Transaktionsterminal weitergeleitet werden, was zu höherem Komfort und geringerem Fehlerrisiko im Vergleich zu einer manuellen Eingabe des Transaktionswerts am Transaktionsterminal führt. Darüber hinaus steht bei einer derartigen Ausführungsform der Transaktionswert dem Mautterminal zum Weiterleiten an den Mautserver sofort zur Verfügung.

Besonders vorteilhaft ist es, wenn als Zahlungstransaktionssystem ein Kreditkarten-Zahlungstransaktionssystem verwendet wird. Damit kann das Straßenmautsystem im beschriebenen Verfahren auf die besonders hohe Flexibilität und Sicherheit von Kreditkartenzahlungstransaktionen zurückgreifen, ohne dabei die Zahlungstransaktionen selbst ausführen zu müssen, und die Verbreitung und internationale Anwendbarkeit von Kreditkarten vorteilhaft nutzen.

Weitere Merkmale und Vorteile der Erfindung ergeben sich aus der nachfolgenden Beschreibung eines bevorzugten Ausführungsbeispiels unter Bezugnahme auf die begleitenden Zeichnungen, in denen zeigt:
Fig. 1 schematisch den physischen Aufbau eines Straßenmautsystems und eines Zahlungstransaktionssystems und deren Zusammenwirken im erfindungsgemäßen Verfahren; und
Fig. 2 ein Sequenzdiagramm einer Ausführungsform des erfindungsgemäßen Verfahrens.

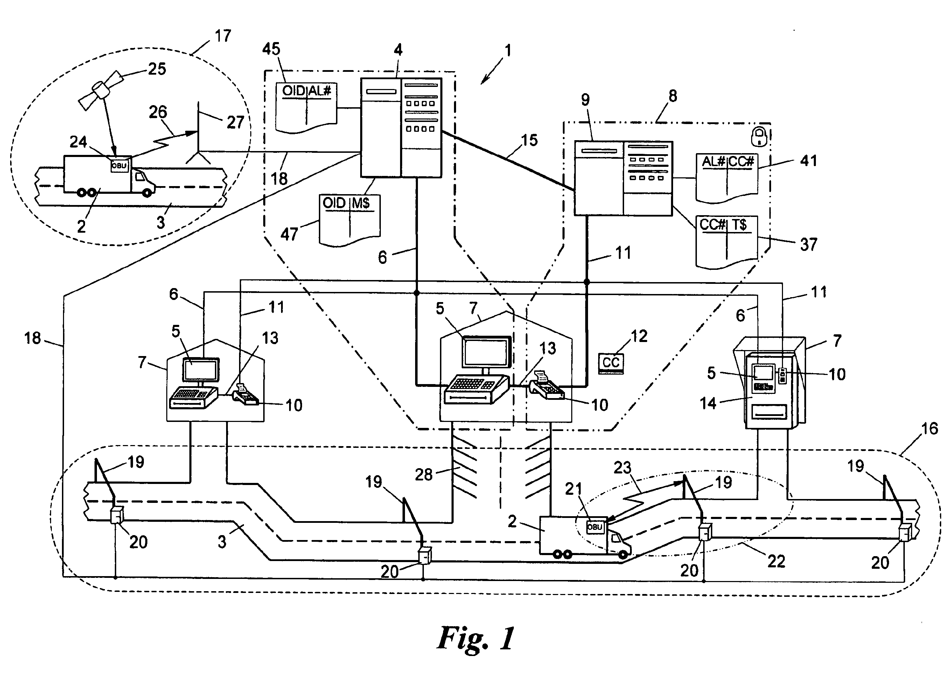

Fig. 1 zeigt ein Straßenmautsystem 1 zum Ermitteln und Vermauten von Ortsnutzungen von Fahrzeugen 2, welche sich auf Straßen 3 bewegen. Das Straßenmautsystem 1 umfasst einen zentralen Mautserver 4, welcher mit einer Vielzahl von dezentralen Mautterminals 5 über Datenverbindungen 6 verbunden ist. Die Mautterminals 5 sind an Verteilerstellen 7 angeordnet.

Ein Zahlungstransaktionssystem 8 zum Abrechnen der Ortsnutzungen der Fahrzeuge 2 umfasst einen zentralen Transaktionsserver 9, welcher mit einer Vielzahl von dezentralen Transaktionsterminals 10 über Datenverbindungen 11 verbunden ist. Bei dem Zahlungstransaktionssystem 8 handelt es sich um ein gesichertes Transaktionssystem auf Basis von Zahlungskarten 12, wie Kreditkarten, Debitkarten oder Guthabenkarten, bei denen die Zahlungstransaktion in einem Online-Verfahren mittels Kommunikation zwischen dem Transaktionsserver 9 und dem jeweiligen Transaktionsterminal 10, das zu diesem Zweck über eine eindeutige Transaktionsterminalkennung PID verfügt, stattfindet. Eine Zahlungskarte 12 verfügt ihrerseits über eine eindeutige Kennung CC# und gegebenenfalls einen Benutzercode PIN.

Das Zahlungstransaktionssystem 8 ist nach strengsten Datensicherheitsvorschriften und -Standards ausgebildet und zertifiziert, wie dem Payment Card Industry Data Security Standard (PCI-DSS), dem Visa^{Ⓡ}-Account-Information-Security-Programm (AIS und dessen Schwesterprogramm CISP), dem MasterCard^{Ⓡ}-Site-Data-Protection-Programm (SDP), der American Express^{Ⓡ} Security Operating Policy (DSOP), der Discover Information Security and Compliance (DISC) oder den JCB^{®}-Sicherheitsregeln sowie vergleichbaren Zahlungstransaktionsverfahren etwa auch unter Nutzung des Maestro^{Ⓡ} SecureCode oder des MasterCard^{Ⓡ} SecureCode^{TM}.

Die Transaktionsterminals 10 sind ebenso wie die Mautterminals 5 an bzw. in den Verteilerstellen 7 angeordnet und mit diesen jeweils über eine Datenverbindung 13 verbunden. Dabei dient ein Mautterminal 5 als Eingabestelle für Daten, welche für den Mautserver 4 bestimmt sind, und leitet Daten, die es vom Transaktionsterminal 10 erhält, an den Mautserver 4 weiter. Wie in Fig. 1 dargestellt, kann das Mautterminal 5 beispielsweise als Kassensystem in einer Mautstelle oder Verschleißstelle, z.B. an Landesgrenzen oder Tankstellen, ausgeführt sein. Das Transaktionsterminal 10 dient als lokale Benutzerschnittstelle für die Zahlungstransaktion und kann mit einem Kartenleser für die Zahlungskarte 12 und einer einfachen Tastatur zur Dateneingabe ausgestattet sein. Verteilerstellen 7 mit beiden Terminals 5 und 10 können, wie dargestellt, auch in Form von integrierten Automaten 14 zur Selbstbedienung ausgeführt sein.

Zwischen dem Transaktionsserver 9 und dem Mautserver 4 besteht eine weitere Datenverbindung 15 zum direkten Datenaustausch zwischen diesen, wie weiter unten ausführlicher beschrieben. Sowohl Transaktionsserver 9 als auch Mautserver 4 sind dabei nicht notwendigerweise als jeweils einzelne, abgeschlossene Recheneinheiten aufzufassen, sondern können Teile von derartigen Recheneinheiten oder Teile gegebenenfalls geographisch verteilter Serverfarmen oder auch Teile anderer Rechnersysteme, z.B. in einem Kreditinstitut oder bei einem Straßenbetreiber, sein.

Die Datenverbindungen 6, 11 und 15 können in Form von drahtgebundenen Leitungen gegebenenfalls mit proprietären Datenübertragungsprotokollen, Internetverbindungen (z.B. in Form eines virtuellen privaten Netzwerks VPN) oder als Drahtlosverbindungen, z.B. Mobilfunk, aber auch satellitengestützt, ausgeführt sein, wobei sie permanent bestehen oder im Bedarfsfall aufgebaut werden können (z.B. mittels Einwahlmodems, als paketvermittelte Datensitzungen usw.). Auch ist jede Kombination von Verbindungsarten möglich, sodass entlegene, selten genutzte Maut- oder Transaktionsterminals 5, 10 Einwahlverbindungen aufbauen, während Maut- bzw. Transaktionsterminals 5, 10 an stark frequentierten Orten permanent mit den Maut- und Transaktionsservern 4, 9 in Verbindung stehen können.

Der Mautserver 4 steht mit Subsystemen 16, 17 zum Ermitteln der Ortsnutzungen von Fahrzeugen 2 in Verbindung, welche Subsysteme 16, 17 ebenfalls Teile des Straßenmautsystems 1 sind. Die dazu genutzten Datenverbindungen 18 können in verschiedener Weise, wie in Zusammenhang mit den Datenverbindungen 6, 11, 15 beschrieben, ausgeführt sein.

Ein erstes beispielhaftes Subsystem ist das Subsystem 16, welches über geographisch verteilte Kurzreichweiten-Kommunikationsbaken (dedicated short range communication beacons, DSRC-Baken) 19 mit lokalen Recheneinheiten 20 verfügt. Tritt ein von einem Fahrzeug 2 mitgeführtes Fahrzeuggerät (Onboard-Unit, OBU) 21 in den Funkbereich 22 einer DSRC-Bake 19 ein, so stellen diese DSRC-Bake 19 und die OBU 21 eine Kommunikationsverbindung 23 her. An dieser Kommunikationsverbindung 23 wird die Nutzung des im Funkbereich 22 der DSCR-Bake 19 liegenden Abschnitts bzw. Orts der Straße 3 durch das Fahrzeug 2 erkannt. Als Kommunikationsverbindung 23 eignen sich alle bekannten Kurzreichweiten-Verbindungen wie Infrarot-Verbindungen, WAVE (Wireless Access in Vehicular Environments), WLAN (Wireless Local Area Network), Wi-Fi^{Ⓡ}, Bluetooth^{Ⓡ} etc.

Die Ortsnutzungen werden dabei im Straßenmautsystem 1 anhand einer jeder OBU 21 zugeordneten, eindeutigen Fahrzeuggerät- bzw. OBU-Kennung OID ermittelt, welche im Rahmen der Kommunikationsverbindung 23 an die DSRC-Bake 19 gesandt wird. Die DSRC-Baken 19 senden die in den Kommunikationsverbindungen 23 ermittelten Daten beispielsweise gemeinsam mit eindeutigen Bakenkennungen BID der DSRC-Baken 19 über die Datenverbindungen 18 an den Mautserver 4.

Ein zweites beispielhaftes Subsystem ist das Subsystem 17, welches die Ortsnutzungen der Fahrzeuge 2 mit Hilfe von OBUs 24 ermittelt, die sich in einem globalen Satellitennavigationssystem 25 selbst verorten. Die OBUs 24 kommunizieren über eine Funkstrecke 26 mit einem Funknetz 27, das die ermittelten Ortsnutzungen über die Datenverbindung 18 an den zentralen Mautserver 4 sendet. Bei der Funkstrecke 26 und dem Funknetz 27 handelt es sich bevorzugt um ein zellulares Mobilfunknetz. Alternativ kann diese Verbindung jedoch auch über eine der Kurzreichweiten-Kommunikationsverbindungen 23 und DSRC-Baken 19 oder andere geeignete, mit dem Mautserver 4 in Verbindung stehende Funknetzwerke aufgebaut werden.

Ortsnutzungen von Fahrzeugen 2, welche im Straßenmautsystem 1 ermittelt und vermautet werden, können beliebiger Art sein, sei es das Befahren einer Mautstraße wie der Straße 3 oder eines Abschnitts derselben, das Einfahren in ein spezifisches Gebiet (innerstädtische Bereiche, Nationalparks, Tunnels etc.), oder das Verweilen in einem Gebiet wie dem Parkplatz 28 etc. Die für die Ortsnutzung abzurechnende Maut kann auf gefahrene Strecke (Wegemaut) und/oder auf Benutzungsdauer (Zeitmaut) bezogen sein.

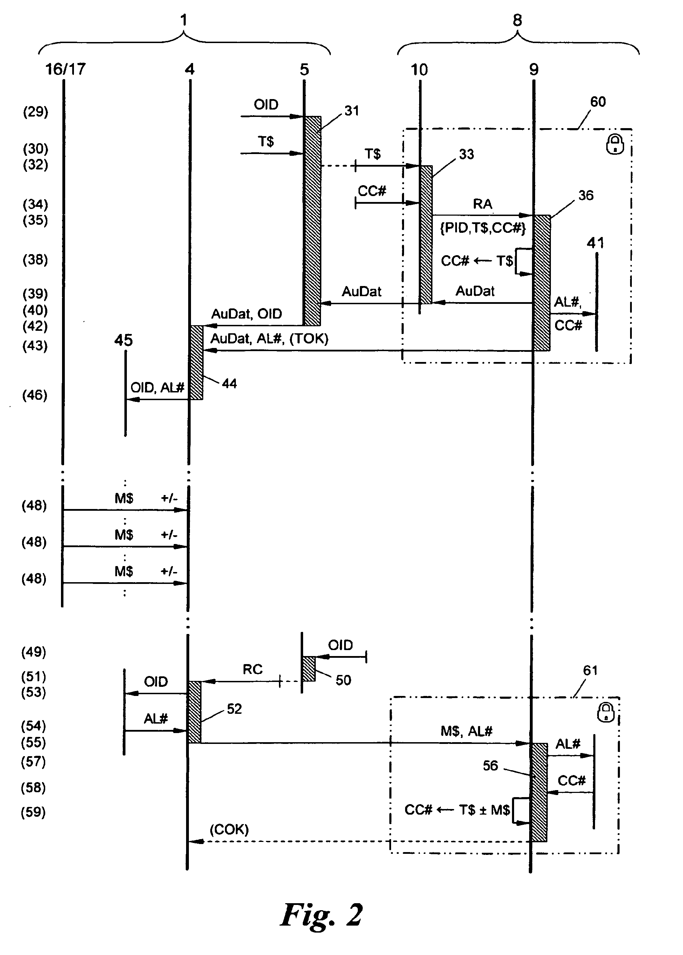

Fig. 2 zeigt das Verfahren zum Abrechnen der Ortsnutzungen der Fahrzeuge 2 im Detail. Das Verfahren startet mit der Eingabe einer Fahrzeuggerätkennung OID in Schritt 29 und eines Transaktionswerts T$ in Schritt 30 in eines der Mautterminals 5, was darin einen Prozess 31 auslöst. Der Transaktionswert T$ dient beispielsweise als Vorauszahlung für eine später abzurechnende Maut und kann z.B. auch eine Sicherheitsleistung (Deposit) für die OBU 21, 24 umfassen. Alternativ könnte der Transaktionswert T$ auch nur ein symbolischer Betrag sein, z.B. 1 Eurocent, um überhaupt eine Transaktion auszulösen.

Die Reihenfolge der Schritte 29 und 30 ist beliebig; auch kann die Eingabe der Fahrzeuggerätkennung OID zu einem späteren Zeitpunkt im Prozess 31 erfolgen. Der Prozess 31 dient der Erfassung und Sammlung der für das Verfahren aus Sicht des Straßenmautsystems 1 notwendigen Informationen der Transaktion und deren Weiterleitung an den Mautserver 4.

Der Transaktionswert T$ kann in Schritt 30 frei festgelegt und manuell eingegeben, als fixer Wert vorgegeben oder aus einer vorgefertigten Liste im Mautterminal 5 ausgewählt werden. In Schritt 32 wird der Transaktionswert T$ an das mit dem Mautterminal 5 über die Verbindung 13 verbundene Transaktionsterminal 10 gesendet, um darin einen Autorisierungsprozess 33 anzustoßen. Wie in Fig. 2 angedeutet, kann die Eingabe des Transaktionswerts T$ in Schritt 32 alternativ auch direkt am Transaktionsterminal 10 erfolgen, in welchem Fall Schritt 30 entfällt.

In Schritt 34 wird die Kartenkennung CC# einer Zahlungskarte 12 in das Transaktionsterminal 10 eingegeben, z.B. durch Einlesen der Zahlungskarte 12 an einem Kartenleser des Transaktionsterminals 10 oder durch Eingeben der Kartenkennung CC# über eine Tastatur. Die Eingabe eines Benutzercodes PIN und zusätzlicher, z.B. nutzerbezogener Informationen am Transaktionsterminal 10 kann optional in Abhängigkeit vom eingesetzten Zahlungstransaktionssystem 8 vorgesehen sein.

Die Reihenfolge der Eingabe von Transaktionswert T$, Kartenkennung CC# und gegebenenfalls Benutzercode PIN und weiterer Daten am Transaktionsterminal 10 ist beliebig und wird in der Regel vom Zahlungstransaktionssystem 8 vorgegeben.

Sind alle für eine Zahlungstransaktion notwendigen Daten im Transaktionsterminal 10 erfasst, sendet dieses, gegebenenfalls nach Quittieren, eine Autorisierungsanforderung RA an den Transaktionsserver 9 (Schritt 35). Die Autorisierungsanforderung RA enthält die Kennung des Transaktionsterminals PID, den Transaktionswert T$, die Kartenkennung CC# und optional den Benutzercode PIN und weitere Benutzerdaten.

Mit dem Empfang der Autorisierungsanforderung RA {PID, T$, CC#} startet im Transaktionsserver 9 ein Prozess 36 zum Autorisieren der Zahlungstransaktion und Generieren einer Ersatzkennung AL# für die Kartenkennung CC#. Der Transaktionsserver 9 prüft dazu anhand der in Schritt 35 mit der Autorisierungsanforderung RA empfangenen Daten die Zahlungstransaktion auf ihre Validität. Der genaue Ablauf der Validierung ist dem Stand der Technik für das jeweils eingesetzte Zahlungstransaktionssystem 8 zu entnehmen; der Transaktionsserver 9 kann dabei z.B. ein von ihm geführtes, der jeweiligen Zahlungskarte 12 zugeordnetes Kartenkonto 37 (Fig. 1) abfragen, wie Schritt 38 versinnbildlicht, welcher auch zu einem anderen Zeitpunkt im Prozess 36 oder sogar nach dessen Abschluss durchgeführt werden kann.

Nach positiver Prüfung bzw. Validierung sendet der Transaktionsserver 9 als Autorisierung für die Zahlungstransaktion Autorisierungsdaten AuDat an das Transaktionsterminal 10 zurück, welches diese an das Mautterminal 5 weiterleitet und seinen Autorisierungsprozess 33 beendet (Schritt 39). Die Authorisierungsdaten AuDat sind für jede Zahlungstransaktion eindeutig. Sie können dazu beispielsweise einen Zeitstempel der Transaktion, die Kennung PID des verwendeten Transaktionsterminals 10 und ein digitales Zertifikat des Transaktionsservers 9 enthalten, wie in der Technik bekannt.

Die im Prozess 36 generierte Ersatzkennung AL# der Kartenkennung CC# ist dieser eindeutig zugeordnet und wird in Schritt 40 in einer Datenbank 41 des Transaktionsservers 9 zur späteren Verwendung gespeichert. Aus der bloßen Kenntnis der Ersatzkennung AL# ist die Kartenkennung CC# nicht ableitbar, sie kann jedoch Teile der Kartenkennung CC# enthalten, z.B. deren letzte 4 Ziffern zu Plausibilisierungszwecken.

Zum Ende des Prozesses 31 liegen damit im Mautterminal 5 die vom Transaktionsserver 9 über das Transaktionsterminal 10 erhaltenen Autorisierungsdaten AuDat und die zuvor eingegebene Fahrzeuggerätkennung OID vor. Die Autorisierungsdaten AuDat und die Fahrzeuggerätkennung OID werden in Schritt 42 vom Mautterminal 5 über die Datenverbindung 6 an den Mautserver 4 gesendet, was den Prozess 31 im Mautterminal 5 abschließt.

In vergleichbarer Weise liegen zum Ende des Prozesses 36 im Transaktionsserver 9 die Autorisierungsdaten AuDat und die Ersatzkennung AL# vor. Diese werden in Schritt 43 über die Datenverbindung 15 ebenfalls an den Mautserver 4 gesendet, was den Prozess 36 am Transaktionsserver 9 abschließt. Optional kann in Schritt 43 auch eine Bestätigungsmeldung TOK ("transaction ok") vom Transaktionsserver 9 an den Mautserver 4 mitgesendet werden.

Die beiden Schritte 42 und 43 sind von einander zeitlich unabhängig und können in beliebiger Reihenfolge ablaufen. Auch können die darin gesendeten Daten über die Autorisierungsdaten AuDat und Fahrzeuggerätkennung OID bzw. Ersatzkennung AL# hinausgehende Informationen, beispielsweise den Transaktionswert T$ sowie weitere personen- und/oder fahrzeugbezogene Daten, enthalten.

Der Mautserver 4 nutzt anschließend in einem Prozess 44 die Autorisierungsdaten AuDat, welche er einerseits vom Mautterminal 5 über die Datenverbindung 6 im Schritt 42 und andererseits vom Transaktionsserver 9 über die Datenverbindung 15 im Schritt 43 erhalten hat, zur einander Zuordnung der jeweils mitgesendeten Ersatzkennung AL# und mitgesendeten Fahrzeuggerätkennung OID. Die einander zugeordneten Kennungen OID, AL# werden anschließend in einer Datenbank 45 des Mautservers 4 zur weiteren Verwendung bei der Abrechnung gespeichert (Schritt 46).

Für einen späteren Nachweis könnte der Mautserver 4 im Schritt 46 auch zusätzliche Informationen speichern, wie die Autorisierungsdaten AuDat selbst oder weitere während des Prozesses 31 am Mautterminal 5 erfasste und an den Mautserver 4 in Schritt 42 gesendete personen-, fahrzeug- und/oder transaktionsbezogene Daten.

Der Mautserver 4 verwendet anschließend die Ersatzkennung AL# und/oder die Fahrzeuggerätkennung OID zur Führung bzw. Identifikation eines personen- und/oder fahrzeugbezogenen Mautkontos 47 zur Abrechnung von Mauttransaktionen im Straßenmautsystem 1. Fig. 2 zeigt einige beispielhafte Mauttransaktionen 48, welche von den Subsystemen 16, 17 ausgelöst werden, um Ortsnutzungen von Fahrzeugen 2 zu ermitteln und daraus mautrelevante Daten, sog. "Mautwerte" M$, für den Mautserver 4 zu erzeugen. Bei den Mautwerten M$ kann es sich - je nach Architektur des Straßenmautsystems 1 - einerseits um die Angabe einzelner Ortsnutzungen z.B. in Form einer Fahrzeuggerätkennung OID gemeinsam mit einer Bakenkennung BID handeln, andererseits können sie fertige einzelne oder kumulierte Mautberechnungsergebnisse oder eine Mischung dieser Varianten sein, und dabei sowohl von den DSRC-Baken 19 als auch den sich selbst verortenden OBUs 24 über das Funknetz 27 jeweils unter einer Fahrzeuggerätkennung OID an den Mautserver 4 gesendet werden. Der Mautserver 4 belastet (oder begünstigt) jeweils das der Fahrzeuggerätkennung OID zugeordnete Mautkonto 47 mit dem bzw. den Mautwerten M$.

Zur anschließenden Abrechnung der Ortsnutzungen eines Fahrzeugs 2 über das Zahlungstransaktionssystem 8 gibt ein Benutzer in Schritt 49 z.B. die im Fahrzeug 2 mitgeführte OBU 21 bzw. 24 in einer beliebigen Verteilerstelle 7 zurück, wodurch (oder wobei) die Fahrzeuggerätkennung OID erneut dem Mautterminal 5 bekanntgegeben wird (Prozess 50). Das Mautterminal 5 sendet daraufhin in Schritt 51 eine Abrechnungsaufforderung RC an den Mautserver 4. Eine Abrechnungsaufforderung RC kann natürlich auch ohne Rückgabe einer OBU 21, 24 erfolgen, z.B. bei Tausch zweier OBUs 21, 24 oder einfach durch Eingabe der Fahrzeuggerätkennung OID in das Mautterminal 5. Sie könnte außerdem auch direkt im Mautserver 4 bei Eintreten bestimmter Ereignisse, z.B. zu Monatsende für eine Monatsabrechnung, generiert werden, in welchem Fall die Schritte 49 bis 51 entfallen.

In einem durch die Abrechungsaufforderung RC ausgelösten folgenden Prozess 52 ermittelt der Mautserver 4 nun aus der Datenbank 45 die der Fahrzeuggerätkennung OID zugeordnete Ersatzkennung AL#, siehe Schritte 53 und 54. In Schritt 55 sendet der Mautserver 4 anschließend den oder die Mautwert(e) M$ der Mauttransaktionen 48 - oder einen daraus im Mautkonto 47 akkumulierten Mautwert M$ - unter der Ersatzkennung AL# an den Transaktionsserver 9 und beendet den Prozess 52 und schließt dabei gegebenenfalls auch das zugehörige Mautkonto 47. Die Mitsendung weiterer Daten in Schritt 55, z.B. der Autorisierungsdaten AuDat zur zusätzlichen Sicherstellung der Authentizität, ist dabei ebenfalls möglich.

Der Transaktionsserver 9 übernimmt anschließend die Abrechnung auf Basis der Zahlungskarte 12 bzw. deren Kartenkennung CC#. Dabei kann sowohl eine Gutschrift als auch eine Lastschrift mit der Zahlungskarte 12 abgerechnet werden. Nach dem Empfang des bzw. der Mautwert(e) M$ und der Ersatzkennung AL# vom Mautserver 4 in Schritt 55 ermittelt der Transaktionsserver 9 in einem Prozess 56 zunächst aus der Datenbank 41 die zur Ersatzkennung AL# gehörige Kartenkennung CC#, siehe Schritte 57 und 58. Der bzw. die Mautwert(e) M$ werden daraufhin in Schritt 59 dem Kartenkonto 37 mit der Kartenkennung CC# angelastet oder gutgeschrieben, was den Abrechnungsvorgang der Ortsnutzungen abschließt. Optional kann eine Bestätigungsmeldung COK ("charge ok") des Abrechnungsvorganges vom Transaktionsserver 9 an den Mautserver 4 erfolgen.

Wie durch die Blöcke 60 und 61 in Fig. 2 versinnbildlicht, handelt es sich bei dem Zahlungstransaktionssystem 8 um ein gesichertes Zahlungstransaktionssystem 8. Die Berührungspunkte des Straßenmautsystems 1 mit dem gesicherten Zahlungstransaktionssystem 8 sind auf ein Minimum beschränkt: Nur in den Schritten 43 des Sendens der Autorisierungsdaten AuDat und der Ersatzkennung AL# an den Mautserver 4 und 55 des Sendens des berechneten Mautwerts M$ und der Ersatzkennung AL# an den Transaktionsserver 9 kommt es zu einer Datenübertragung zwischen Mautserver 4 und Transaktionsserver 9; und nur im Rahmen des Autorisierungsprozesses 33 findet ein Datenaustausch auf Ebene der jeweils in einer Verteilerstelle 7 miteinander in Verbindung stehenden Mautterminals 5 und Transaktionsterminals 10 statt.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Verfahren zum Abrechnen von Ortsnutzungen von Fahrzeugen (2) in einem Straßenmautsystem (1) mittels eines davon gesonderten Zahlungstransaktionssystems (8), wobei das Stra-βenmautsystem (1) einen zentralen Mautserver (4) und damit in Verbindung stehend dezentrale Mautterminals (5) und zumindest ein Subsystem (16, 17) zum Ermitteln der Ortsnutzungen der Fahrzeuge (2) im Zusammenspiel mit von diesen mitgeführten Fahrzeuggeräten (21, 24) umfasst, wobei das Zahlungstransaktionssystem (8) einen Transaktionsserver (9) und damit in Verbindung stehend dezentrale Transaktionsterminals (10) zum Abrechnen von Zahlungstransaktionen mittels Zahlungskarten (12) umfasst, und wobei zumindest ein Mautterminal (5) mit zumindest einem Transaktionsterminal (10) in Verbindung steht, **gekennzeichnet durch**
i) in einer ersten Phase des Verfahrens die folgenden Schritte:
Eingeben einer eindeutigen Kennung (OID) eines Fahrzeuggeräts (21, 24) in das Mautterminal (5), was auch zu einem späteren Zeitpunkt bis zum Senden der Fahrzeuggerätkennung (OID) erfolgen kann;
Eingeben eines Transaktionswerts (T$) und einer eindeutigen Kennung (CC#) einer Zahlungskarte (12) in das Transaktionsterminal (10) als Zahlungstransaktion und Senden einer Autorisierungsaufforderung (RA) enthaltend die Zahlungstransaktion vom Transaktionsterminal (10) an den Transaktionsserver (9);
Senden von im Transaktionsserver (9) generierten, der Zahlungstransaktion zugehörigen Autorisierungsdaten (AuDat) vom Transaktionsserver (9) an das Transaktionsterminal (10) und Weiterleiten derselben an das Mautterminal (5);
Senden der Autorisierungsdaten (AuDat) und einer im Transaktionsserver (9) generierten, der Kartenkennung (CC#) eindeutig zugeordneten Ersatzkennung (AL#) vom Transaktionsserver (9) an den Mautserver (4) über eine weitere Datenverbindung (15) zum direkten Datenaustausch zwischen diesen, mit voraus- oder nachgehendem
Senden der Autorisierungsdaten (AuDat) und der Fahrzeuggerätkennung (OID) vom Mautterminal (5) an den Mautserver (4); und
einander Zuordnen der Ersatzkennung (AL#) und der Fahrzeuggerätkennung (OID) im Mautserver (4) anhand der mit diesen jeweils mitempfangenen Autorisierungsdaten (AuDat);
ii) in einer zweiten Phase des Verfahrens die folgenden Schritte:
Ermitteln von Ortsnutzungen eines das genannte Fahrzeuggerät (21, 24) mitführenden Fahrzeugs (2) **durch** das Subsystem (16, 17), und
Berechnen zumindest eines Mautwerts (M$) aufgrund der ermittelten Ortsnutzungen bezüglich dessen Fahrzeuggerätkennung (OID) im Straßenmautsystem (1);
iii) in einer dritten Phase des Verfahrens die folgenden Schritte:
Senden einer Abrechnungsaufforderung (RC) enthaltend die genannte Fahrzeuggerätkennung (OID) von einem Mautterminal (5) an den Mautserver (4);
Ermitteln der der empfangenen Fahrzeuggerätkennung (OID) zugeordneten Ersatzkennung (AL#) im Mautserver (4) und Senden der ermittelten Ersatzkennung (AL#) und des zumindest einen berechneten Mautwerts (M$) vom Mautserver (4) an den Transaktionsserver (9); und
Ermitteln der der empfangenen Ersatzkennung (AL#) zugeordneten Kartenkennung (CC#) im Transaktionsserver (9) und Abrechnen des zumindest einen empfangenen Mautwerts (M$) anhand der Kartenkennung (CC#).

2. Verfahren nach Anspruch 1, **dadurch gekennzeichnet, dass** im Schritt des Sendens der Autorisierungsdaten (AuDat) und der Fahrzeuggerätkennung (OID) vom Mautterminal (5) an den Mautserver (4) der Transaktionswert (T$) mitgesendet wird.

3. Verfahren nach Anspruch 1 oder 2, **dadurch gekennzeichnet, dass** im Schritt des Sendens der Autorisierungsdaten (AuDat) und der Ersatzkennung (AL#) vom Transaktionsserver (9) an den Mautserver (4) der Transaktionswert (T$) mitgesendet wird.

4. Verfahren nach einem der Ansprüche 1 bis 3, **dadurch gekennzeichnet, dass** die Autorisierungsdaten (AuDat) einen Autorisierungscode, einen Zeitstempel der Autorisierung und eine eindeutige Kennung (PID) des genannten Transaktionsterminals (10) enthalten.

5. Verfahren nach einem der Ansprüche 1 bis 4, **dadurch gekennzeichnet, dass** im Schritt des Eingebens der Fahrzeuggerätkennung (OID) am Mautterminal (5) zusätzlich personen- und/oder fahrzeugbezogene Daten erfasst und im Schritt des Sendens der Autorisierungsdaten (AuDat) und der Fahrzeuggerätkennung (OID) vom Mautterminal (5) an den Mautserver (4) mitgesendet werden.

6. Verfahren nach einem der Ansprüche 1 bis 5, **dadurch gekennzeichnet, dass** im Mautserver (4) mehrere Fahrzeuggerätkennungen (OID) ein und derselben Ersatzkennung (AL#) unter einer Vertragskennung zugeordnet werden.

7. Verfahren nach einem der Ansprüche 1 bis 6, **dadurch gekennzeichnet, dass** zumindest ein Subsystem (16) über ein Netz geographisch verteilter Funkbaken (19), welche mit Fahrzeuggeräten (21) über Kurzreichweitenfunk kommunizieren, deren Ortsnutzungen ermittelt.

8. Verfahren nach einem der Ansprüche 1 bis 7, **dadurch gekennzeichnet, dass** zumindest ein Subsystem (17) über sich in einem globalen Satellitennavigationssystem (25) selbst verortende Fahrzeuggeräte (24), welche mit dem Mautserver (4) über ein Funknetz (27) kommunizieren, deren Ortsnutzungen ermittelt.

9. Verfahren nach einem der Ansprüche 1 bis 8, **dadurch gekennzeichnet, dass** der Schritt des Eingebens des Transaktionswerts (T$) in das Transaktionsterminal (10) durch Datenübertragung (13) vom Mautterminal (5) zum Transaktionsterminal (10) erfolgt.

10. Verfahren nach einem der Ansprüche 1 bis 9, **dadurch gekennzeichnet, dass** als Zahlungstransaktionssystem (8) ein Kreditkarten-Zahlungstransaktionssystem verwendet wird.

## Claims

1. A method for charging position usages of vehicles (2) in a road toll system (1) by means of a separate payment transaction system (8), wherein the road toll system (1) comprises a central toll server (4) and decentralized toll terminals (5) connected thereto, and at least one subsystem (16, 17) for determining the position usages of the vehicles (2) in cooperation with vehicle devices (21, 24) carried by the vehicles, wherein the payment transaction system (8) comprises a transaction server (9) and decentralized transaction terminals (10) connected thereto for charging payment transactions by means of payment cards (12), and wherein at least one toll terminal (5) is connected to at least one transaction terminal (10), **characterized by**
i) in a first phase of the method, the following steps:
inputting an unambiguous identifier (OID) of a vehicle device (21, 24) into the toll terminal (5), which inputting can also occur at a later point of time until transmitting the vehicle device identifier (OID);
inputting a transaction value (T$) and an unambiguous card identifier (CC#) of a payment card (12) into the transaction terminal (10) as a payment transaction and transmitting an authorization request (RA) containing the payment transaction from the transaction terminal (10) to the transaction server (9);
transmitting authorization data (AuDat), generated in the transaction server (9) and associated to the payment transaction, from the transaction server (9) to the transaction terminal (10) and routing the authorization data to the toll terminal (5);
transmitting the authorization data (AuDat) and a substitute identifier (AL#), generated in the transaction server (9) and unambiguously assigned to the card identifier (CC#), from the transaction server (9) to the toll server (4) via an additional data link (15) for direct data exchange between the two, with preceeding or following
transmitting the authorization data (AuDat) and the vehicle device identifier (OID) from the toll terminal (5) to the toll server (4); and
associating the substitute identifier (AL#) and the vehicle device identifier (OID) in the toll server (4) based on the authorization data (AuDat) received with them respectively;
ii) in a second phase of the method, the following steps:
determining, by means of the subsystem (16, 17), position usages of a vehicle (2) carrying the aforementioned vehicle device (21, 24), and
calculating at least one toll value (M$) based on the position usages determined with respect to the vehicle device identifier (OID) of this vehicle in the road toll system (1);
iii) in a third phase of the method, the following steps:
transmitting a charging request (RC) containing the aforementioned vehicle device identifier (OID) from a toll terminal (5) to the toll server (4);
acquiring the substitute identifier (AL#) assigned to the received vehicle device identifier (OID) in the toll server (4) and transmitting the acquired substitute identifier (AL#) and the at least one calculated toll value (M$) from the toll server (4) to the transaction server (9); and
determining the card identifier (CC#) assigned to the received substitute identifier (AL#) in the transaction server (9) and charging the at least one received toll value (M$) based on the card identifier (CC#).

2. The method according to Claim 1, **characterized in that** the transaction value (T$) is also transmitted in the step of transmitting the authorization data (AuDat) and the vehicle device identifier (OID) from the toll terminal (5) to the toll server (4).

3. The method according to Claim 1 or 2, **characterized in that** the transaction value (T$) is also transmitted in the step of transmitting the authorization data (AuDat) and the substitute identifier (AL#) from the transaction server (9) to the toll server (4).

4. The method according to one of Claims 1 to 3, **characterized in that** the authorization data (AuDat) contains an authorization code, a time stamp of the authorization and an unambiguous identifier (PID) of the aforementioned transaction terminal (10).

5. The method according to one of Claims 1 to 4, **characterized in that** extra personal and/or vehicle-related data is acquired in the step of inputting the vehicle device identifier (OID) at the toll terminal (5) and is also transmitted in the step of transmitting the authorization data (AuDat) and the vehicle device identifier (OID) from the toll terminal (5) to the toll server (4).

6. The method according to one of Claims 1 to 5, **characterized in that** several vehicle device identifiers (OID) are assigned to a single substitute identifier (AL#) in the toll server (4) under a contract identifier.

7. The method according to one of Claims 1 to 6, **characterized in that** at least one subsystem (16) acquires position usages of vehicle devices via a network of geographically distributed radio beacons (19) that communicate with the vehicle devices (21) via dedicated short-range communication.

8. The method according to one of Claims 1 to 7, **characterized in that** at least one subsystem (17) acquires position usages via self-locating vehicle devices (24) using a global satellite navigation system (25) that communicate with the toll server (4) via a wireless network (27).

9. The method according to one of Claims 1 to 8, **characterized in that** the step of inputting the transaction value (T$) into the transaction terminal (10) takes place via data transmission (13) from the toll terminal (5) to the transaction terminal (10).

10. The method according to one of Claims 1 to 9, **characterized in that** a credit card payment transaction system is used as the payment transaction system (8).

## Revendications

1. Procédé de facturation d'utilisations d'espace de véhicules (2) dans un système de péage routier (1) au moyen d'un système de transaction de paiement (8) séparé dudit premier système, le système de péage routier (1) comportant un serveur de péage central (4), des terminaux de péage (5) décentralisés en liaison avec ledit serveur de péage et au moins un sous-système (16, 17) destiné à déterminer les utilisations d'espace des véhicules (2) en interaction avec des appareils de véhicule (21, 24) transportés par ces véhicules, le système de transaction de paiement (8) comportant un serveur de transaction (9) et des terminaux de transaction (10) décentralisés en liaison avec ledit serveur de transaction et destinés à la facturation de transactions de paiement au moyen de cartes de paiement (12), et au moins un terminal de péage (5) étant en liaison avec au moins un terminal de transaction (10), caractérisé
i) dans une première phase du procédé, par les étapes suivantes:
saisie d'un identifiant univoque (OID) d'un appareil de véhicule (21, 24) dans le terminal de péage (5), cette saisie pouvant être également effectuée à un moment ultérieur jusqu'à l'envoi de l'identifiant de l'appareil de véhicule (OID);
saisie d'une valeur de transaction (T$) et d'un identifiant univoque (CC#) d'une carte de paiement (12) dans le terminal de transaction (10) en tant que transaction de paiement et envoi au serveur de transaction (9) d'une demande d'autorisation (RA) contenant la transaction de paiement du terminal de transaction (10);
envoi des données d'autorisation (AuDat), générées dans le serveur de transaction (9) et appartenant à la transaction de paiement, du serveur de transaction (9) au terminal de transaction (10) et retransmission desdites données au terminal de péage (5);
envoi des données d'autorisation (AuDat) et d'un identifiant de rechange (AL#), généré dans le serveur de transaction (9) et associé de manière univoque à l'identifiant de carte (CC#), du serveur de transaction (9) au serveur de péage (4) par le biais d'une autre liaison de données (15) en vue de l'échange de données direct entre ceux-ci, ledit envoi étant précédé ou suivi d'un
envoi des données d'autorisation (AuDat) et de l'identifiant de l'appareil de véhicule (OID) du terminal de péage (5) au serveur de péage (4); et
association de l'identifiant de rechange (AL#) et de l'identifiant de l'appareil de véhicule (OID) dans le serveur de péage (4) à l'aide des données d'autorisation (AuDat) reçues à chaque fois conjointement aux dits identifiants;
ii) dans une deuxième phase du procédé, par les étapes suivantes:
détermination par le sous-système (16, 17) des utilisations d'espace d'un véhicule (2) transportant ledit appareil de véhicule (21, 24), et
calcul d'au moins une valeur de péage (M$) en raison des utilisations d'espace déterminées relativement à son identifiant de l'appareil de véhicule (OID) dans le système de péage routier (1);
iii) dans une troisième phase du procédé, par les étapes suivantes:
envoi d'une demande de facturation (RC) contenant ledit identifiant de l'appareil de véhicule (OID) d'un terminal de péage (5) au serveur de péage (4) ;
détermination, dans le serveur de péage (4), de l'identifiant de rechange (AL#) associé à l'identifiant de l'appareil de véhicule (OID) reçu et envoi de l'identifiant de rechange (AL#) déterminé et de la ou des valeurs de péage (M$) calculées du serveur de péage (4) au serveur de transaction (9); et
détermination, dans le serveur de transaction (9), de l'identifiant de carte (CC#) associé à l'identifiant de rechange (AL#) reçu et facturation de ou des valeurs de péage (M$) reçues à l'aide de l'identifiant de carte (CC#).

2. Procédé selon la revendication 1, **caractérisé en ce que** la valeur de transaction (T$) est également envoyée au cours de l'étape de l'envoi des données d'autorisation (AuDat) et de l'identifiant de l'appareil de véhicule (OID) du terminal de péage (5) au serveur de péage (4).

3. Procédé selon la revendication 1 ou 2, **caractérisé en ce que** la valeur de transaction (T$) est également envoyée au cours de l'étape de l'envoi des données d'autorisation (AuDat) et de l'identifiant de rechange (AL#) du serveur de transaction (9) au serveur de péage (4).

4. Procédé selon l'une quelconque des revendications 1 à 3, **caractérisé en ce que** les données d'autorisation (AuDat) contiennent un code d'autorisation, un horodatage de l'autorisation et un identifiant univoque (PID) dudit terminal de transaction (10).

5. Procédé selon l'une quelconque des revendications 1 à 4, **caractérisé en ce que** des données relatives à une personne et/ou au véhicule sont saisies en plus au cours de l'étape de la saisie de l'identifiant de l'appareil de véhicule (OID) sur le terminal de péage (5) et qu'elles sont envoyées également au cours de l'étape de l'envoi des données d'autorisation (AuDat) et de l'identifiant de l'appareil de véhicule (OID) du terminal de péage (5) au serveur de péage (4).

6. Procédé selon l'une quelconque des revendications 1 à 5, **caractérisé en ce que**, dans le serveur de péage (4), plusieurs identifiants de l'appareil de véhicule (OID) sont associés à un même identifiant de rechange (AL#) sous un identifiant de contrat.

7. Procédé selon l'une quelconque des revendications 1 à 6, **caractérisé en ce qu'**au moins un sous-système (16) détermine par le biais d'un réseau de radiobalises réparties géographiquement (19), qui communiquent par une radiocommunication de courte portée avec des appareils de véhicule (21), les utilisations d'espace de ceux-ci.

8. Procédé selon l'une quelconque des revendications 1 à 7, **caractérisé en ce qu'**au moins un sous-système (17) détermine les utilisations d'espace d'appareils de véhicule (24) par le biais de ceux-ci qui se localisent eux-mêmes par le biais d'un système mondial de navigation par satellites (25) et qui communiquent avec le serveur de péage (4) par un réseau de radiocommunications (27).

9. Procédé selon l'une quelconque des revendications 1 à 8, **caractérisé en ce que** l'étape de saisie de la valeur de transaction (T$) dans le terminal de transaction (10) est effectuée par une transmission de données (13) du terminal de péage (5) au terminal de transaction (10).

10. Procédé selon l'une quelconque des revendications 1 à 9, **caractérisé en ce qu'**un système de transaction de paiement avec des cartes de crédit sert de système de transaction de paiement (8).
